# EUROPEAN PATENT SPECIFICATION

(11) **EP 1 411 702 B1**
(45) Date of publication and mention of the grant of the patent: **09.03.2011**
(21) Application number: 03254982.6
(22) Date of filing: 12.08.2003
(51) Int. Cl.: H04L 29/06, H04W 4/02, H04W 8/18

(54) **Provisions of services via a mobile telecommunications network**
Bereitstellung von Diensten über ein Mobiltelekommunikationsnetz
Fourniture de services par l'intermédiaire d'un réseau de télécommunication mobile

(30) Priority: 15.10.2002 GB 0223992
(43) Date of publication of application: 21.04.2004
(73) Proprietor: Vodafone Group PLC, Newbury Berkshire RG14 2FN (GB)
(72) Inventor: Brookes, Mark Andrew, Thacham, Berkshire RG19 3TY (GB); Fellows, Andrew Mark, Wantage, Oxon, OX123 9AS (GB); Rodriguez-Reyes, José Manuel, Jaen 23400 (ES)
(74) Representative: Harries, Simon George

(56) References cited:
- WO-A-01/28273
- WO-A-02/065804
- DE-A1- 19 638 072

## Description

The invention relates to a system, telecommunications network and method by which a service provider provides a service to a user in a mobile telecommunications network in response to a request for the service by that user, in which the network generates a request ID in response to the user request, the network transmits the request ID to the service provider, and the service provider provides the service to the user via the network and using the request ID.

Systems, networks and methods according to the invention, to be described in more detail below by way of example only, enable application service providers to provide services to users in a mobile telecommunications network such as a cellular telephone network.

According to a first aspect of the invention, there is provided a system for allowing communication between a user of a telecommunications network and a service provider, including means for receiving a request from the user for a service from the service provider; means for generating a service request ID which identifies the user to the network for a selected time period but which does not identify the user to the service provider in a manner enabling the service provider to directly access the user; and means for enabling the service provider to access the user indirectly via the network using the service request ID; characterized by means for extending the selected time period in response to a further request relating to the service from the user.

According to a second aspect of the invention, there is provided a telecommunications apparatus including a mobile telecommunications network, at least one service provider and a system as defined in the preceding paragraph.

According to a third aspect of the invention, there is provided a method by which a service provider provides a service to a user in a telecommunications network in response to a request for the service by that user, in which the network generates a request ID in response to the user request, the network transmits the request ID to the service provider, and the service provider provides the service to the user via the network and using the request ID, the request ID including identity information which identifies the user to the network for a selected period of time but which does not identify the user to the service provider in a manner enabling the service provider to directly access the user, characterised by the step of extending the selected time period in response to a further request relating to the service from the user.

Systems, networks and methods according to the invention for providing services to users in a cellular telephone network will now be described by way of example only and with reference to the accompanying diagrammatic drawings in which:
Figure 1 shows such a network;
Figure 2 shows different methods of providing service request IDs ; and
Figure 3 is a flow chart showing operations taking place in the network.

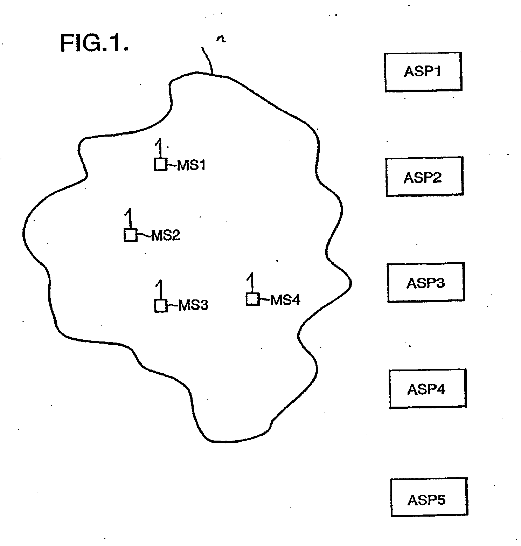

Figure 1 shows a cellular telecommunications network n in which are located users having respective mobile telephone handsets or mobile stations MS1, MS2, MS3, MS4... The network n may be a GSM or 3G (Third Generation) network or similar network.

Figure 1 also shows a number of application service providers ASP1, ASP2, ASP3, ASP4, ASP5.... The application service providers provide various services to users in the network n. The services offered by the ASPs may be of various types. For example, they may be of the "subscription" or "non-subscription" type. A subscription-type service might be, for example, a traffic information service to which a particular user subscribes, paying an annual or monthly subscription fee, automatically being provided with periodic or irregular information concerning road traffic conditions relevant to the location of the user's vehicle at any time. Other examples of subscription-type services are the provision of news information, sports information, financial information and weather information. Subscription-type services therefore provide services on an on-going basis to subscribing users.

A non-subscription-type service provides a single service to a user, normally on a commercial basis and for a single payment. Such a service may in particular be dependent on the user's current location. One example of such a non-subscription-type service is a service provided by (or on behalf of) a chain of fast food (e.g. pizza) outlets distributed geographically over all or part of the area covered by the network n. Using this service, a user, in response to a specific real time request, can be provided by the relevant ASP (e.g. ASP1) with directions to or the address of the outlet nearest to the user's current location. For the provision of this information, ASP1 will make a (normally small) charge. The charge could be debited directly to the user. Instead, in a case where ASP1 is providing the service for the chain of pizza outlets, the charge might be debited to that chain in the form of an "introduction fee" for introducing that user to the particular outlet. Such charges may be debited by the network on behalf of the ASP.

The system and method to be described in more detail below are particularly concerned with non-subscription-type services - such as the example given above where a user in the network n wishes to ask ASP 1 for directions to or the location of the nearest pizza outlet. Obviously, though, the system and method can provide other non-subscription-type services.

The system and method to be described are intended to deal with certain problems or potential problems:-
(a) ASP 1 needs to know the location of the user, in order to be able to accede to the user's request for directions to or the location of the nearest pizza outlet. The operator of the network n has this information - but it of course has value or potential value and the network operator will therefore not wish to disclose it freely to ASP1.
(b) If the system and method are arranged so that the user makes a telephone call direct to ASP1, the user's CLI (calling line identifier, or telephone number) will normally be disclosed to ASP1. ASP1 can then correspond directly with the user and obtain the user's location. The valuable information, concerning user's telephone number and location, as known to the network operator, will then have been directly and freely disclosed to ASP1 without recompense to the network operator (apart, of course, from the cost of the telephone call).
(c) If the user's telephone number becomes disclosed to ASP1, the ASP will be able to use this information in future to make direct calls to the user, offering the pizza service (or other services), thus detrimentally by-passing the network operator.
(d) It is of major importance that the network operator (and other parties in the system) respect data protection and privacy laws and regulations. Thus, these may be breached sending of by unsolicited advertising calls or other "spam" to the user (e.g. by the ASP if the ASP gains knowledge of the user's telephone number) or by disclosure of the user's identity, or identity combined with location, of the user. Mere disclosure to the ASP of the user's location, without identifying the user in a manner enabling the ASP to make direct access to the user, will not breach such laws or regulations.

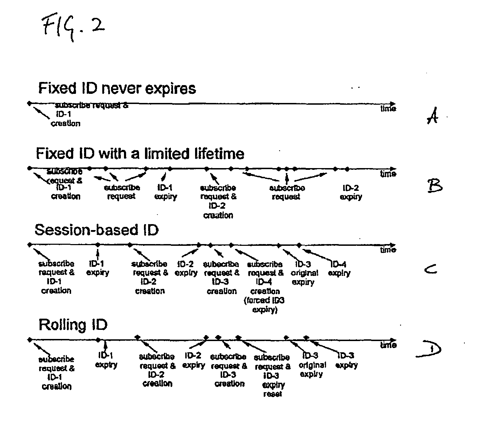

Figure 2A shows a prior scheme where a user is given a fixed ID or "User Tag" that never expires (or expires after a very long period of time). When a user of the mobile network wishes to subscribe to a service provided by an ASP, an appropriate request is passed from the user's mobile terminal to the network. The network generates an appropriate ID (ID-1) which includes information relating to the user and the service to which the user wishes to subscribe. This information is encoded or encrypted in the user ID such that the information relating to the identity of the user is not accessible by the ASP, although the ID can be distinguished by the ASP from other user IDs relating to other user requests. The user ID is, however, accessible and understandable to the network. When an appropriate ID is generated, this ID can be used to access services for the user provided by the ASP for an indefinite (or very long) period of time. The ID is the same for all requests for service irrespective of the number of requests from the user. Such an ID may be used for subscription-type services described above. The disadvantage of such an arrangement is that, because the ID does not change, should the ID become known to an unauthorised party, the unauthorised party will be able to access the user and also services, possibly at the user's expense, at least until the unauthorised access is detected, whereafter the ID could be cancelled.

Figure 2B shows an alternative arrangement where a user is provided with a fixed ID (ID-1, ID-2) which expires after a limited, pre-determined time period. Such an arrangement is more secure than the arrangement of Figure 2A because, even if the user's ID becomes known to an unauthorized party, the ID will only allow access to the user and to services for a limited time period. A disadvantage of this system is that, if a user requires a succession of accesses to an ASP relating to a single service, the ID may expire while the successive accesses are being made. The requirement to generate a new ID, following expiry of the previous ID, creates an additional system overhead, possibly slowing the communication between the user and the ASP. Also, the creation of a new user ID may result in complications when it is required to bill the user for use of the service. Typically, a succession of communications relating to the provision of a single service would result in the user paying a single charge. A convenient way of recording that a charge should be made to the user is to generate a charge on the user's account on issuance of an ID. However, on issuance of a second ID (ID-2) relating to a succession of communications relating to a single service, generation of a charge on the user's account must be inhibited. Treating the first (ID-1) issued and subsequently issued (ID-2) IDs in a different manner for charging purposes is inconvenient and adds to complexity of the mobile network and accounting systems.

Further, because in Figure 2B the user ID expires after a fixed period of time, such expiry could occur after sending of a communication requesting a reply but before the reply has been transmitted. In this event, no reply will be received because the reply will be encoded based on an expired user ID, and it will no longer be possible to forward the reply to the appropriate user or ASP, as no data will be available linking the ID to any particular user, as this will be deleted from the database of valid IDs following expiry of the ID.

A further arrangement is shown in Figure 2C (which is described in W0-A-02/065804), where a "session"-based ID is issued when a request for a new service is made by a user.

A series of communications between a user and an ASP relating to a particular service are referred to as a "session". Such communications could, in the case of the pizza outlet example, include:
(a) User request for the address of the nearest pizza outlet;
(b) ASP provides user with a list of nearby pizza outlets.
(c) User selects the pizza outlet of his choice and sends this to the ASP.
(d) ASP provides the user with directions to the pizza outlet using the user's location information.

Further communications relating to this service may follow, for example, to provide a picture of the pizza outlet (in the form of an MMS, for example), a food menu, etc.

For each of these communications between the user and the ASP, a multiplicity of data exchanges between the user's mobile terminal and the ASP may be required.

All these communications between the user and the ASP will be *via* the network and will use the current user ID.

Such a session-based ID automatically expires after the earliest of:
(i) a request for a further service is issued by the user or
(ii) a pre-determined time period has expired (which is relatively short ― for example about 30 minutes ― but sufficient such that inaction for this time would generally indicate that the session was finished).

Such an arrangement is advantageous in that it should not be necessary to change the user's ID during a session relating to a single service (ID-1, ID-2). However, if the user requests two services in quick succession (ID-3, ID-4), a response to the first request for service (ID-3) may be undeliverable as the user ID associated therewith will have been caused to expire by the second request for a service (ID-4).

One solution to this problem would be to allow the user to have more than one ID valid at a given time. If communications relating to a first session were not completed, the generation of a second user ID would allow a second series of communications relating to another session to begin and run in parallel to the first session. However, allowing a user to have more than one "live" ID at any given time significantly increases system overheads and increases the complexity of the billing process.

Figure 2D shows an improved arrangement in accordance with an embodiment of the present invention. In the Figure 2D arrangement, each ID will initially be set to expire after a predetermined time period x (for example, 30 minutes). When the user makes a request relating to a particular service, a check is made to determine whether the user already has a "live" ID relating to this service. In Figure 2D, the first request to check for existing "live" IDs produces a negative result, and a new ID (ID-1) is created. The same situation occurs on creation of the second and third IDs (ID-2, ID-3). However, when a further request for a service which is already being provided in association with ID-3 is made, the check by the system for a valid "live" ID relating to the service produces a positive result. In contrast to the arrangement described in relation to Figure 2C, a new ID (which would be ID-4) is not created, but rather the period for which ID-3 is valid is extended by a predetermined amount y. The total validity period is x + y.

Repeated requests for service while ID-3 is valid will result in ID-3 being repeatedly extended by period y. It is intended that the user ID is valid until all data exchanges relating to a session or service have been completed, whereafter the user ID expires - rendering it useless if subsequently obtained by an unauthorized party.

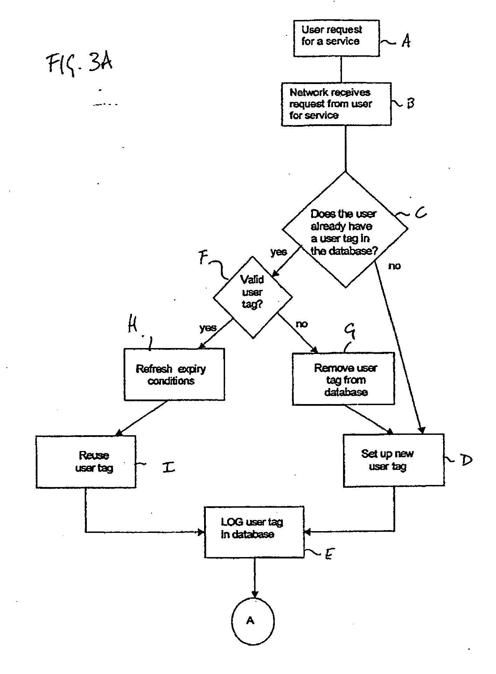

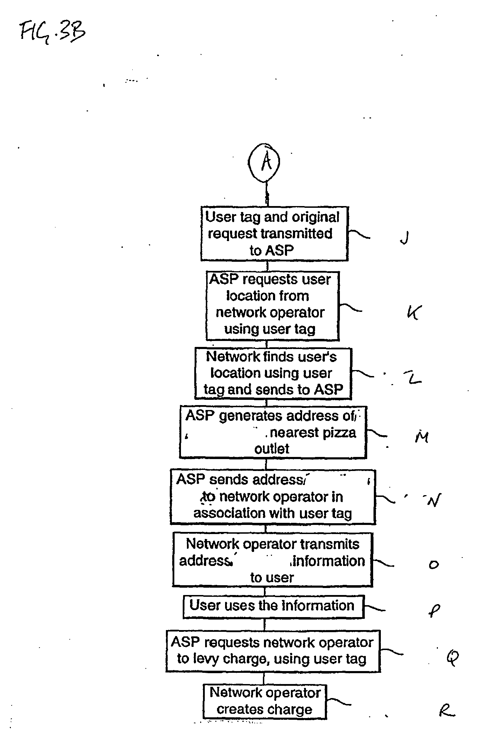

The system and method will now be described in more detail with reference to Figure 3 which represents a flow chart of the operations taking place.

At A, a user initiates a request to ASP1 for (in this example) the address of the nearest pizza outlet. At step B, this request is received by the network n. It is not transmitted directly to ASP 1 but recognized as being intended for ASP 1.

At step C the network consults a database of user tags that it maintains. The database lists all user tags, the status of the user tags ("live", expired, etc.) and the service for which the user tag is effective. By consulting the database the network is able to determine whether the user already has a user tag issued to them. If there is no user tag control is passed to Step D, where a new user tag is generated.

The user tag comprises at least four components: (i) an identification of the user (for example, the mobile terminal's MSISDN, a username and password or any other identifier); (ii) an identification of the ASP which is to be involved in the transaction (ASP 1 in this case); (iii) the time and date of the user's request; and (iv) information relating to the actual connection (mode, format etc.). In connection with (iv), a "session" between a user and ASP may consist of many components. There could be several layers of activity going on in one session, which all may require different billing/auditing. Hence the specifics of the connection will identify the unique aspects of the session. It is an important feature of the user tag that it is encoded or encrypted in a suitable way (discussed below in more detail) so that the information which it contains is not accessible by the ASP though it can be distinguished by the ASP from user tags relating to other user requests; thus for example, the user tag may comprise a multi-digit number or have alphanumeric or any other suitable form. The information which it contains or represents remains accessible by the network operator.

At Step E the new user tag is logged in the database.

If, at Step C, it is determined that the user already has a user tag in the database, the validity of this tag in relation to the user request received at Step B is determined, at Step F. For example, the status of the user tag is checked in the database. If the user tag in the database has expired or if it is for a different service, the user tag is determined not to be valid for this service and the user tag may be removed from the database at Step G, if appropriate. After removal of the user tag from the database at Step G, control passes to Step D where a new user tag is set up, which is logged in the database as appropriate, at Step E.

However, if the user tag is determined to be valid, at Step F, control passes to Step H, where the expiry conditions are refreshed. That is, the time that the user tag expires is extended by, for example, a pre-determined time period in order allow the request for service received at Step B to be dealt with. That the user tag will be reused (Step I) and has had its expiry conditions refreshed is noted in the database at Step E.

At step J, the network passes the user tag to ASP 1 which recognises it as representing a request from a user for the address of the user's nearest pizza outlet. ASP1 does not of course receive any information about the user or the user's location (except that it is implicit that the user is within the area covered by the network n).

If ASP 1's system is currently operative, the ASP will at step K request information about the user's location from the network n, using the user tag as a means of relating this request to the particular user.

At step L, the network responds to this request by providing the location of the user to ASP 1 - that is, by defining the geographical area in which the user is currently present. The network knows which user is concerned because it derives this information from the user tag. This is the only information which the network will provide; no information identifying the user or the user's telephone number is provided.

At step M, ASP 1 responds to receipt of the information about the user's location by generating the requested information (the address of the nearest pizza outlet). Alternatively, it may be that there is no pizza outlet within reasonable distance of the user's location, and information to that effect will instead be generated. At step N, the ASP passes this information back to the network n. At step 0, the network transmits this information to the user. Thus, ASP 1 has no direct communication with the user and does not need to know the user's telephone number (or identity).

At step P the user then acts in accordance with the address/directions provided.

At step Q, ASP 1 then requests the network operator to levy a charge against the user, for the provision of the service. ASP 1 will again use the user tag during this process so that the network operator can identify the user and levy the charge accordingly (step R). The charge can be levied by debiting the user's call charge log (if the user is a contract customer) or placing a debit against the user's pre-paid credit if the user is a pre-pay customer.

Figure 3 describes how the address of a pizza restaurant is transmitted to a user in response to a request from the user. In addition to simply transmitting the request, further information may be provided which relates to the same service. For example, on requesting the address of the nearest pizza outlet, the user could be provided with a list of nearby pizza outlets. The user then selects the pizza outlet of his choice. This selection is communicated to the relevant ASP, again using the same user tag as with the original request. When the request from the user is received the check performed at Step C of Figure 3 will identify that there is a user tag in the database. The check at Step F will reveal that the user tag is valid for this service. At Step G, the expiry time of the user tag will be extended. The user's selection of pizza outlet will be communicated, using the user tag, to the ASP. The ASP will then, for example, provide the user, using the user tag, with directions to the pizza outlet using the user's location information. Further communications relating to this service may follow, for example, to provide a picture of the pizza outlet (in the form of an MMS, for example), a food menu, etc. Each time a user request relating to the service is received by the network, it is identified that there is a valid live user tag relating to the service, and the expiry time of the user tag is extended. This allows all the communications relating to the service to be performed using a single user tag. A single charge is levied by the network relating to the service. The user of a single user tag simplifies the levying of the single charge.

After a pre-determined period of non-use of the user tag, the user tag will expire, and a new user tag will be generated for the user for subsequent service requests. Renewal of the user tag protects the privacy of the user.

The user tag can be protected in any suitable way. For example, it could be produced in the form of a random multi-digit number which is stored by the network operator in a database in association with the specific four components of the user tag. Instead, the user tag could be generated by the network operator and then encrypted using the network operator's public key in a public/private key system. Other suitable methods of coding or encrypting or otherwise protecting the information in the user tag can be used.

The user tag can be used to perform an auditing function. The network operator will have a complete record of the transactions and services requested and delivered. This is clearly relevant to billing but can also be used for marketing and data analysis purposes (e.g. which is the most popular ASP etc.).

It is important to note that the system described is not restricted to location-dependent services. For example, a user could order a ring tone from an ASP. The ASP provider can then deliver the ring tone directly to the user's mobile without needing to know the mobile number (by using the user tag in the manner explained). In addition, information not related to location can be delivered directly to a user using the user tag in the manner explained (e.g. share prices).

## Claims

1. A system for allowing communication between a user (MS1,MS2,...) of a telecommunications network (n) and a service provider (ASP1,ASP2,...), including means for receiving a request from the user (MS1,MS2,...) for a service from the service provider (ASP1,ASP2,...); means for generating a service request ID which identifies the user (MS1,MS2,...) to the network (n) for a selected time period but which does not identify the user (MS1,MS2....) to the service provider (ASP1,ASP2,...) in a manner enabling the service provider (ASP1,ASP2) to directly access the user (MS1,MS2,...); and means for enabling the service provider (ASP1,ASP2....) to access the user (MS1,MS2) indirectly via the network (n) using the service request ID; **characterized by** means for extending the selected time period in response to a further request relating to the service from the user (MS1,MS2,...).

2. A system according to claim 1, wherein the extending means only extends the selected time period if the selected time period is determined not to have expired.

3. A system according to claim 1 or 2, wherein the provision of the service by the service provider (ASP1,ASP2...) requires that the service provider (ASP1,ASP2,...) has location information specifying the location of the user (MS1,MS2,...), and in which the service provider (ASP1,ASP2,...) uses the request ID to obtain that location information from the network (n).

4. A system according to claim 3, wherein the service provider (ASP1,ASP2,...) transmits the request ID to the network (n) and the network (n) uses the request ID and the identity information therein to derive the location information and transmits that information to the service provider (ASP1,ASP2,....) in association with the request ID.

5. A system according to any one of claims 1 to 4, wherein the service provider (ASP1,ASP2,...) uses the request ID to request generation of charging information by the network (n) for the provision of the service.

6. A system according to claim 5, wherein the network (n) uses the request ID to identify the user (MS1,MS2,...) in relation to which the charge is to be generated.

7. A system according to any one of claims 1 to 6, wherein the request ID is initially effective for the service provider for a predetermined length of time.

8. A system according to any one of claims 1 to 7, wherein the request ID identifies the service provider and the time of the request to the network (n).

9. A system according to any one of claims 1 to 8, wherein the request ID identifies a position in a database from which the network (n) can extract the identity information.

10. A system according to any one of claims 1 to 9, wherein the request ID is encrypted before receipt by the service provider (ASP1,ASP2,...).

11. A system according to any preceding claim, wherein the telecommunications network (n) is a cellular telecommunications system.

12. Telecommunications system including a mobile telecommunications network (n), at least one service provider (ASP1,ASP2,...) and a system according to any one of claims 1 to 11.

13. A method by which a service provider (ASP1,ASP2,...) provides a service to a user (MS1,MS2,...) in a telecommunications network (n) in response to a request for the service by that user (MS1,MS2,...), in which the network (n) generates a request ID in response to the user request, the network (n) transmits the request ID to the service provider (ASP1,ASP2,...), and the service provider (ASP1,ASP2,...) provides the service to the user (MS1,MS2,...) via the network (n) and using the request ID, the request ID including identity information which identifies the user (MS1,MS2,...) to the network (n) for a selected period of time but which does not identify the user (MS1,MS2...) to the service provider (ASP1,ASP2,...) in a manner enabling the service provider (ASP1,ASP2,...) to directly access the user (MS1,MS2,...), **characterised by** the step of extending the selected time period in response to a further request relating to the service from the user (MS1,MS2,...).

14. A method according to claim 13, wherein the selected time period is only extended if the selected time period is determined not to have expired.

15. A method according to claim 13 or 14, wherein the provision of the service by the service provider (ASP1,ASP2,...) requires that the service provider (ASP1,ASP2,...) has location information specifying the location of the user (MS1,MS2,...), and in which the service provider uses the request ID to obtain that location information from the network.

16. A method according to claim 15, wherein the service provider (ASP1,ASP2,...) transmits the request ID to the network (n) and the network uses the request ID and the identity information therein to derive the location information and transmits that information to the service provider (ASP1,ASP2,...) in association with the request ID.

17. A method according to any one of claims 13 to 16, wherein the service provider (ASP1,ASP2,...) uses the request ID to request generation of charging information by the network (n) for the provision of the service.

18. A method according to claim 17, wherein the network (n) uses the request ID to identify the user in relation to which the charge is to be generated.

19. A method according to any one of claims 13 to 18, wherein the request ID is initially effective for the service provider (ASP1,ASP2,...) for a predetermined length of time.

20. A method according to any one of claims 13 to 19, wherein the request ID identifies the service provider (ASP1,ASP2,...) and the time of the request to the network (n).

21. A method according to any one of claims 13 to 20, wherein the request ID identifies a position in a database from which the network (n) can extract the identity information.

22. A method according to any one of claims 13 to 21, wherein the request ID is encrypted before receipt by the service provider (ASP1,ASP2,...).

23. A method according to any one of claims 13 to 22, wherein the telecommunications network (n) is a cellular telecommunications system.

## Patentansprüche

1. System zum Zulassen von Kommunikation zwischen einem Benutzer (MS1, MS2, ...) eines Telekommunikationsnetzwerks (n) und einem Diensteanbieter (ASP1, ASP2, ...) mit Mitteln zum Empfangen einer Anforderung von dem Benutzer (MS1, MS2, ...) für einen Dienst von dem Diensteanbieter (ASP1, ASP2, ...); Mittel zum Erzeugen einer Dienstanforderungs-ID, die den Benutzer (MS1, MS2, ...) dem Netzwerk (n) für eine gewählte Zeitperiode idenzifiziert, die den Benutzer (MS1, MS2, ...) dem Diensteanbieter (ASP1, ASP2, ...) aber nicht auf eine Weise identifiziert, die es dem Diensteanbieter (ASP1, ASP2, ...) ermöglichen würde, direkt auf den Benutzer (MS1, MS2,...) zuzugreifen; und Mittel, um es dem Diensteanbieter (ASP1, ASP2, ...) zu ermöglichen, mit Hilfe der Dienstanforderungs-ID über das Netzwerk (n) indirekt auf den Benutzer (MS1, MS2, ...) zuzugreifen; **gekennzeichnet durch** Mittel zum Verlängern der gewählten Zeitperiode als Reaktion auf eine weitere Anforderung in Bezug auf den Dienst von dem Benutzer (MS1, MS2, ...).

2. System nach Anspruch 1, wobei das Verlängerungsmittel die gewählte Zeitperiode nur dann verlängert, wenn festgestellt wurde, dass die gewählte Zeitperiode nicht abgelaufen ist.

3. System nach Anspruch 1 oder 2, wobei das Bereitstellen des Dienstes durch den Diensteanbieter (ASP1, ASP2, ...) verlangt, dass der Diensteanbieter (ASP1, ASP2, ...) Ortsinformationen hat, die den Ort des Benutzers (MS1, MS2, ...) vorgeben, und wobei der Diensteanbieter (ASP1, ASP2, ...) die Anforderungs-ID benutzt, um diese Ortsinformationen vom Netzwerk (n) einzuholen.

4. System nach Anspruch 3, wobei der Diensteanbieter (ASP1, ASP2, ...) die Anforderungs-ID zum Netzwerk (n) sendet und das Netzwerk (n) die Anforderungs-ID und die Identitätsinformationen darin benutzt, um die Ortsinformationen abzuleiten, und diese Informationen zum Diensteanbieter (ASP1, ASP2, ...) in Assoziation mit der Anforderungs-ID sendet.

5. System nach einem der Ansprüche 1 bis 4, wobei der Diensteanbieter (ASP1, A S P 2 , ... ) die An forderungs-ID benutzt, um die Erzeugung von Gebühreninformationen durch das Netzwerk (n) für die Bereitstellung des Dienstes anzufordern.

6. System nach Anspruch 5, wobei das Netzwerk (n) die Anforderungs-ID benutzt, um den Benutzer (MS1, MS2, ...) zu identifizieren, in Bezug auf den die Gebühr errechnet werden soll.

7. System nach einem der Ansprüche 1 bis 6, wobei die Anforderungs-ID zunächst für den Diensteanbieter für eine vorbestimmte Zeitdauer effektiv ist.

8. System nach einem der Ansprüche 1 bis 7, wobei die Anforderungs-ID den Diensteanbieter und die Zeit der Anforderung dem Netzwerk (n) identifiziert.

9. System nach einem der Ansprüche 1 bis 8, wobei die Anforderungs-ID eine Position in einer Datenbank identifiziert, aus der das Netzwerk (n) die Identitätsinformationen extrahieren kann.

10. System nach einem der Ansprüche 1 bis 9, wobei die Anforderungs-ID vor dem Empfang durch den Diensteanbieter (ASP1, ASP2,...) verschlüsselt wird.

11. System nach einem der vorherigen Ansprüche, wobei das Telekommunikationsnetzwerk (n) ein zellulares Telekommunikationssystem ist.

12. Telekommunikationssystem mit einem mobilen Telekommunikationsnetzwerk (n), wenigstens einem Diensteanbieter (ASP1, ASP2, ...) und einem System nach einem der Ansprüche 1 bis 11.

13. Verfahren, mit dem ein Diensteanbieter (ASP1, ASP2, ...) einem Benutzer (MS1, MS2, ...) in einem Telekommunikationsnetzwerk (n) als Reaktion auf eine Anforderung des Dienstes durch diesen Benutzer (MS1, MS2, ...) einen Dienst bereitstellt, wobei das Netzwerk (n) eine Anforderungs-ID als Reaktion auf die Benutzeranforderung erzeugt, das Netzwerk (n) die Anforderungs-ID zum Diensteanbieter (ASP1, ASP2, ...) sendet und der Diensteanbieter (ASP1, ASP2, ...) dem Benutzer (MS1, MS2, ...) den Dienst über das Netzwerk (n) bereitstellt und die Anforderungs-ID benutzt, wobei die Anforderungs-ID Identitätsinformationen enthält, die den Benutzer (MS1, MS2, ...) im Netzwerk (n) für eine gewählte Zeitperiode identifizieren, die aber den Benutzer (MS1, MS2,...) dem Diensteanbieter (ASP1, ASP2, ...) nicht auf eine solche Weise identifizieren, die es dem Diensteanbieter (ASP1, ASP2, ...) ermöglicht, direkt auf den Benutzer (MS1, MS2, ...) zuzugreifen, **gekennzeichnet durch** den Schritt des Verlängerns der gewählten Zeitperiode als Reaktion auf eine weitere Anforderung in Bezug auf den Dienst von dem Benutzer (MS1, MS2, ...).

14. Verfahren nach Anspruch 13, wobei die gewählte Zeitperiode nur dann verlängert wird, wenn festgestellt wird, dass die gewählte Zeitperiode nicht abgelaufen ist.

15. Verfahren nach Anspruch 13 oder 14, wobei die Bereitstellung des Dienstes durch den Diensteanbieter (ASP1, ASP2, ...) verlangt, dass der Diensteanbieter (ASP1, ASP2,...) Ortsinformationen hat, die den Ort des Benutzers (MS1, MS2, ...) vorgeben, und wobei der Diensteanbieter die Anforderungs-ID benutzt, um diese Ortsinformationen vom Netzwerk zu erhalten.

16. Verfahren nach Anspruch 15, wobei der Diensteanbieter (ASP1, ASP2,...) die Anforderungs-ID zum Netzwerk (n) sendet und das Netzwerk die Anforderungs-ID und die Identitätsinformationen darin benutzt, um die Ortsinformationen abzuleiten, und diese Informationen zum Diensteanbieter (ASP1, ASP2, ...) in Assoziation mit der Anforderungs-ID sendet.

17. Verfahren nach einem der Ansprüche 13 bis 16, wobei der Diensteanbieter (ASP1, ASP2, ...) die Anforderungs-ID benutzt, um die Erzeugung von Gebühreninformationen durch das Netzwerk (n) für die Bereitstellung des Dienstes anzufordern.

18. Verfahren nach Anspruch 17, wobei das Netzwerk (n) die Anforderungs-ID benutzt, um den Benutzer zu identifizieren, in Bezug auf den die Gebühr errechnet werden soll.

19. Verfahren nach einem der Ansprüche 13 bis 18, wobei die Anforderungs-ID anfänglich für den Diensteanbieter (ASP1, ASP2, ...) für eine vorbestimmte Zeitdauer effektiv ist.

20. Verfahren nach einem der Ansprüche 13 bis 19, wobei die Anforderungs-ID den Diensteanbieter (ASP1, ASP2, ...) und die Zeit der Anforderung dem Netzwerk (n) identifiziert.

21. Verfahren nach einem der Ansprüche 13 bis 20, wobei die Anforderungs-ID eine Position in einer Datenbank identifiziert, aus der das Netzwerk (n) die Identitätsinformationen extrahieren kann.

22. Verfahren nach einem der Ansprüche 13 bis 21, wobei die Anforderungs-ID vor dem Empfang durch den Diensteanbieter (ASP1, ASP2,...) verschlüsselt wird.

23. Verfahren nach einem der Ansprüche 13 bis 22, wobei das Telekommunikationsnetzwerk (n) ein zellulares Telekommunikationssystem ist.

## Revendications

1. Système pour permettre des communications entre un utilisateur (MS 1, MS2, ...) d'un réseau de télécommunications (n) et un fournisseur de services (ASP1, ASP2, ...), englobant des moyens pour recevoir une demande en provenance de l'utilisateur (MS1, MS2, ...) pour un service proposé par le fournisseur de services (ASP1, ASP2, ...) ; des moyens pour générer une ID de demande de service laquelle identifie l'utilisateur (MS1, MS2, ...) par rapport au réseau (n) pendant un intervalle de temps sélectionné mais qui n'identifie pas l'utilisateur (MS1, MS2, ...) auprès du fournisseur de services (ASP1, ASP2, ...) d'une manière qui permette au fournisseur de services (ASP1, ASP2) d'accéder directement à l'utilisateur (MS1, MS2, ...) ; et des moyens pour permettre au fournisseur de services (ASP1, ASP2, ...) d'accéder indirectement à l'utilisateur (MS1, MS2, ...) par l'intermédiaire du réseau (n) grâce à l'utilisation de l'ID de demande de service ; **caractérisé par** des moyens destinés à prolonger l'intervalle de temps sélectionné en réaction à une demande supplémentaire relative au service en provenance de l'utilisateur (MS1, MS2,...).

2. Système selon la revendication 1, les moyens de prolongement prolongeant uniquement l'intervalle de temps sélectionné que s'il a été déterminé que l'intervalle de temps sélectionné n'a pas expiré.

3. Système selon la revendication 1 ou 2, la fourniture du service par le fournisseur de services (ASP1, ASP2, ...) exigeant que le fournisseur de services (ASP1, ASP2, ...) dispose d'informations de localisation qui spécifient la localisation de l'utilisateur (MS1, MS2, ...) et dans lesquelles le fournisseur de services (ASP1, ASP2, ...) utilise l'ID de demande pour obtenir ces informations de localisation auprès du réseau (n).

4. Système selon la revendication 3, le fournisseur de services (ASP1, ASP2, ...) transmettant l'ID de demande au réseau (n) et le réseau (n) utilisant l'ID de demande, ainsi que les informations d'identité dans celle-ci, afin de dériver les informations de localisation et transmettant ces informations au fournisseur de services (ASP1, ASP2, ...) en association avec l'ID de demande.

5. Système selon l'une quelconque des revendications 1 à 4, le fournisseur de services (ASP1, ASP2, ...) utilisant l'ID de demande pour demander la génération d'informations de facturation par le réseau (n) pour la fourniture du service.

6. Système selon la revendication 5, le réseau (n) utilisant l'ID de demande pour identifier l'utilisateur (MS1, MS2, ...) par rapport auquel la taxation doit être générée.

7. Système selon l'une quelconque des revendications 1 à 6, l'ID de demande étant initialement valable pour le fournisseur de services pendant une durée prédéterminée.

8. Système selon l'une quelconque des revendications 1 à 7, l'ID de demande identifiant le fournisseur de services et l'horodatage de la demande faite au réseau (n).

9. Système selon l'une quelconque des revendications 1 à 8, l'ID de demande identifiant une position dans une base de données à partir de laquelle le réseau (n) peut extraire les informations d'identité.

10. Système selon l'une quelconque des revendications 1 à 9, l'ID de demande étant cryptée avant d'être reçue par le fournisseur de services (ASP1, ASP2, ...).

11. Système selon l'une quelconque des revendications précédentes, le réseau de télécommunications (n) étant un système de télécommunications cellulaire.

12. Système de télécommunications englobant un réseau de télécommunications mobiles (n), au moins un fournisseur de services (ASP1, ASP2, ...) et un système selon l'une quelconque des revendications 1 à 11.

13. Procédé grâce auquel un fournisseur de services (ASP1, ASP2, ...) fournit un service à un utilisateur (MS1, MS2, ...) dans un réseau de télécommunications (n) en réaction à une demande pour le service faite par l'utilisateur (MS1, MS2, ...) en question, dans lequel le réseau (n) génère une ID de demande en réaction à la demande de l'utilisateur, le réseau (n) transmet l'ID de demande au fournisseur de services (ASP1, ASP2, ...), et le fournisseur de services (ASP1, ASP2, ...) fournit le service à l'utilisateur (MS1, MS2, ...) par l'intermédiaire du réseau (n) et utilise l'ID de demande, l'ID de demande englobant des informations d'identité qui identifient l'utilisateur (MS1, MS2, ...) par rapport au réseau (n) pendant un intervalle de temps sélectionné mais qui n'identifient pas l'utilisateur (MS1, MS2, ...) auprès du fournisseur de services (ASP1, ASP2, ...) d'une manière qui permette au fournisseur de services (ASP1, ASP2, ...) d'accéder directement à l'utilisateur (MS1, MS2, ...), **caractérisé par** l'étape consistant à prolonger l'intervalle de temps sélectionné en réaction à une demande supplémentaire relative au service en provenance de l'utilisateur (MS1, MS2,...).

14. Procédé selon la revendication 13, l'intervalle de temps sélectionné étant uniquement prolongé que s'il a été déterminé que l'intervalle de temps sélectionné n'a pas expiré.

15. Procédé selon la revendication 13 ou 14, la fourniture du service par le fournisseur de services (ASP1, ASP2, ...) exigeant que le fournisseur de services (ASP1, ASP2, ...) dispose d'informations de localisation qui spécifient la localisation de l'utilisateur (MS1, MS2, ...) et dans lesquelles le fournisseur de services utilise l'ID de demande pour obtenir ces informations de localisation auprès du réseau.

16. Procédé selon la revendication 15, le fournisseur de services (ASP1, ASP2, ...) transmettant l'ID de demande au réseau (n) et le réseau utilisant l'ID de demande, ainsi que les informations d'identité dans celle-ci, afin de dériver les informations de localisation et transmettant ces informations au fournisseur de services (ASP1, ASP2, ...) en association avec l'ID de demande.

17. Procédé selon l'une quelconque des revendications 13 à 16, le fournisseur de services (ASP1, ASP2, ...) utilisant l'ID de demande pour demander la génération d'informations de facturation par le réseau (n) pour la fourniture du service.

18. Procédé selon la revendication 17, le réseau (n) utilisant l'ID de demande pour identifier l'utilisateur par rapport auquel la taxation doit être générée.

19. Procédé selon l'une quelconque des revendications 13 à 18, l'ID de demande étant initialement valable pour le fournisseur de services (ASP1, ASP2, ...) pendant une durée prédéterminée.

20. Procédé selon l'une quelconque des revendications 13 à 19, l'ID de demande identifiant le fournisseur de services (ASP1, ASP2,...) et l'horodatage de la demande faite au réseau (n).

21. Procédé selon l'une quelconque des revendications 13 à 20, l'ID de demande identifiant une position dans une base de données à partir de laquelle le réseau (n) peut extraire les informations d'identité.

22. Procédé selon l'une quelconque des revendications 13 à 21, l'ID de demande étant cryptée avant d'être reçue par le fournisseur de services (ASP1, ASP2, ...).

23. Procédé selon l'une quelconque des revendications 13 à 22, le réseau de télécommunications (n) étant un système de télécommunications cellulaire.
